Europäisches Patentamt

European Patent Office

Office européen des brevets

(11) Publication number: 0 412 044 A2

# EUROPEAN PATENT APPLICATION

(21) Application number: 90600012.0

(22) Date of filing: 29.05.90

(51) Int. Cl.5: **F16H 21/00**

(30) Priority: 18.07.89 GR 89010457

(43) Date of publication of application:
06.02.91 Bulletin 91/06

(84) Designated Contracting States:
AT BE CH DE ES FR GB IT LI NL SE

(71) Applicant: **Symbardis, Christos**
**19, Agisilaou Street AGH Dimitrios**
**GR-173 41 Athens(GR)**

(72) Inventor: **Symbardis, Christos**
**19, Agisilaou Street AGH Dimitrios**
**GR-173 41 Athens(GR)**

(54) Winch.

(57) A winch consisting of two cranks which are similar to those of the reciprocating internal combustion engines, one of which is performing two opposite motions which are mtually neutralised each other and are producing a work that exceeds the given one.

Σχ. 1

EP 0 412 044 A2

## WINCH

The present invention relates to a winch that uses, in the first place, a crank which is similar to that of the reciprocating internal combustion engines.

An advantage of the present invention is the production of work that exceeds the given one.

A characteristic feature of the present invention is the use of two cranks.

The simple manners of presenting the invention are exposed herebelow with reference to the accompanying drawings (I, 2 , 3 , 4, 5 , 6 ).

The winch consists of one metallic box of square cross-section (I) which has, at its opposite walls, two apertures ( holes ) on which a crank (2) rests and rotates.

At the knob of the crank (2), the head of connecting rod (3) is connected with the bearing of connecting rod (4) while the other end of the connecting rod is also modulated into a bearing of connecting rod (5) and a head of connecting rod (6) which is connected with the knob of the crank (7) which ( crank ) has other knobs of connecting rod as well where the head of connecting rod is connected with the bearing of connecting rod (8) by which the motion (drive ) is transmitted.

There exists another connecting rod (I0),similar to the others, which connects the two cranks (2) and (7).

The base knobs of the crank (7) rotate inside two stems (I3) and (I4) with which the crank (7) is reciprocatingly moving into apertures ( holes )of the metalli box(I).The connecting rod(9)connects the two cranks (2)&(7).

Another manner of presenting the invention consists in a metallic box (I5) which has, as its base, an aperture (hole) wherein a piston (I6) is moving backward and forward (reciprocatingly).

The piston in question is connected, by means of a pin (I7), with a connecting rod whose head (I9) and bearing (I8) is connected with the connecting rod knob of the brank (20), while at another connecting rod knob of the crank (20) is connected the bearing (2I) and the head (22) of the connecting rod which transmits the motion drive .

The base knobs of the crank (20) rotate into two holes (23) and (24) of two cranks (25) and (26) with which the crank (20) is moving next to the center.

Another manner of application of the present invention consists in a metallic box (28) which has two apertures ( holes ) on which rests and rotates a crank(29) at the knob of which are connected two connecting rods (3I) and (32), while their other ends are connected with the knob of another crank (30) which is moving backward and forward ( reciprocatingly) and is rotating at the two bearings (34) and (35) whose base is moving backward and forward ( reciprocatingly) at two apertures (holes )of the metallic box.

The bearing(34,35) is connected with the connecting rods(36,33)with the crank(29).

Hollownesses ( cavities ) exist at the bearing and the cranks wherein lubricating oil is circulating.

During the operation of the winch, by providing motion ( drive ) to the one crank, the other crank is then obliged to rotate and to move backward and forward (reciprocatingly) , thereby creating two opposite forces which are mutually neutralized each other, with the result of producing a work that exceeds the given one.

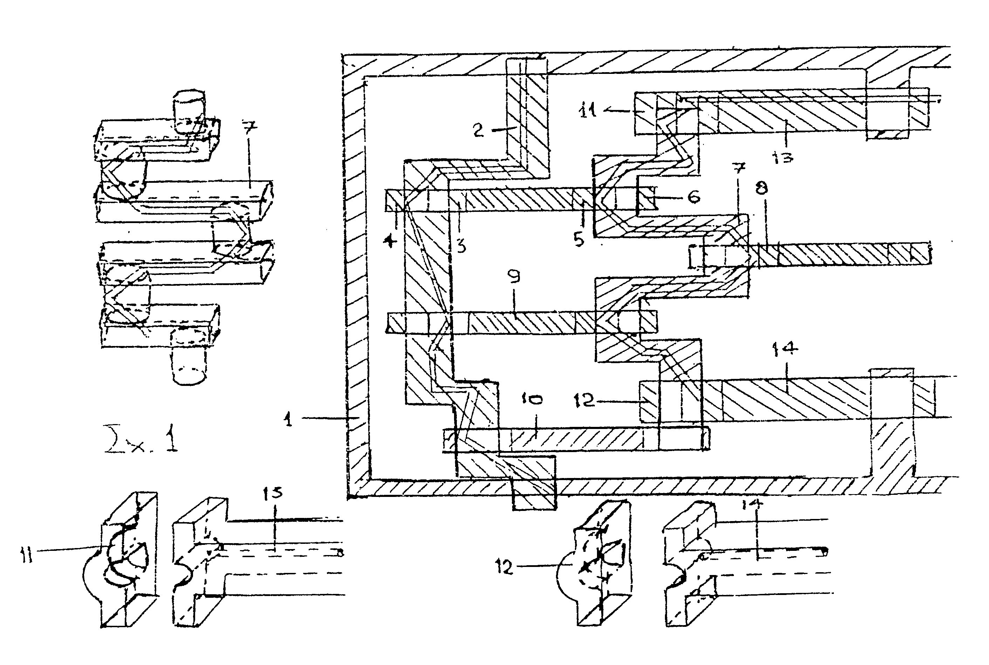

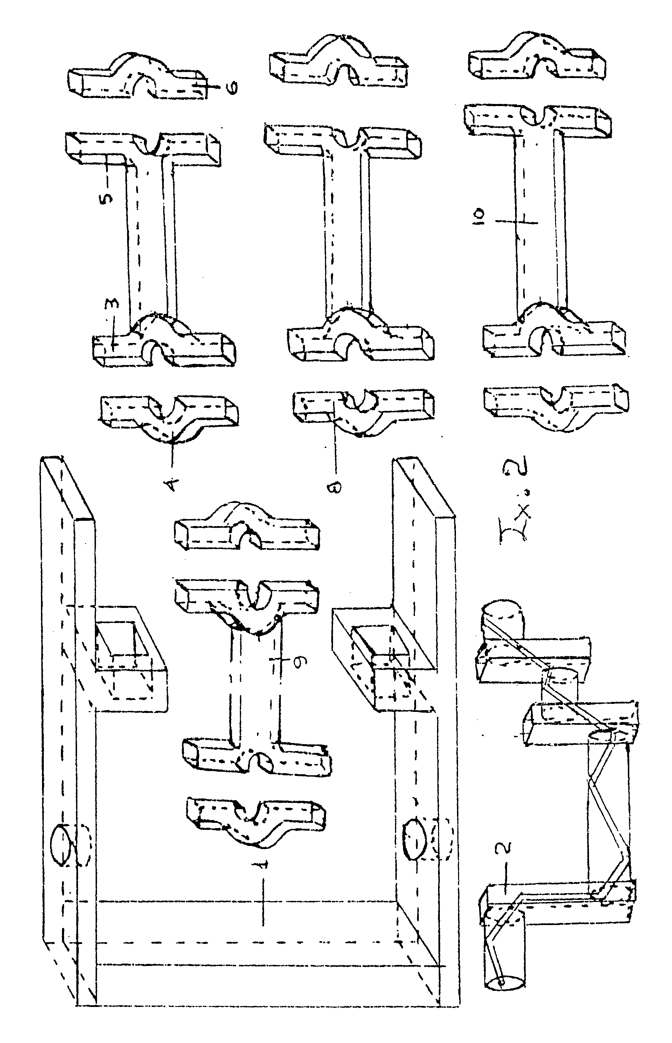

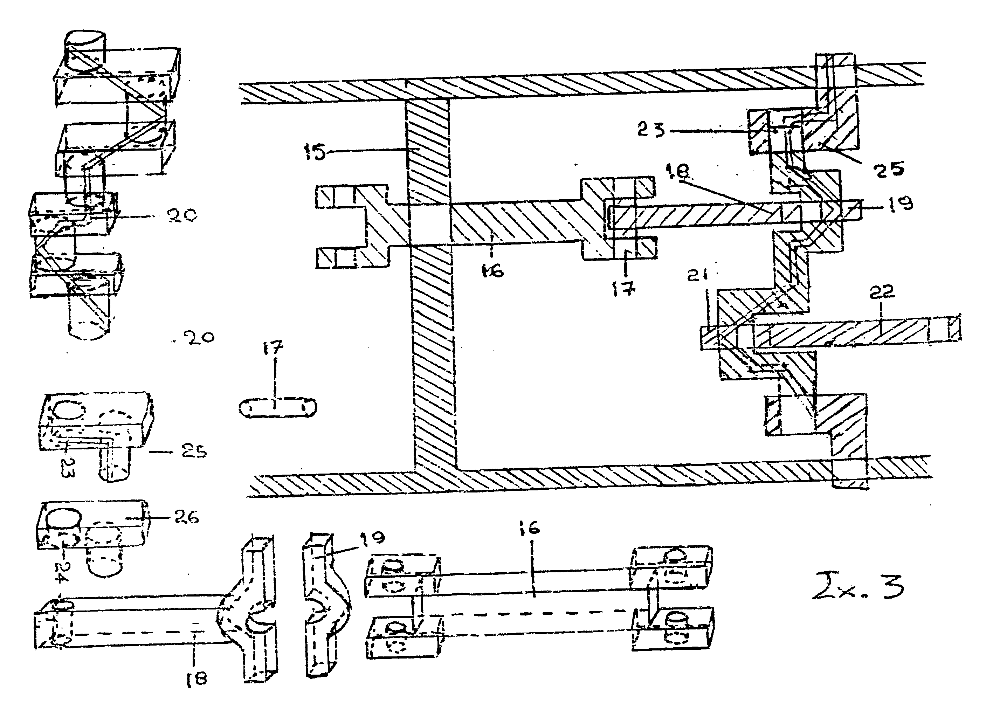

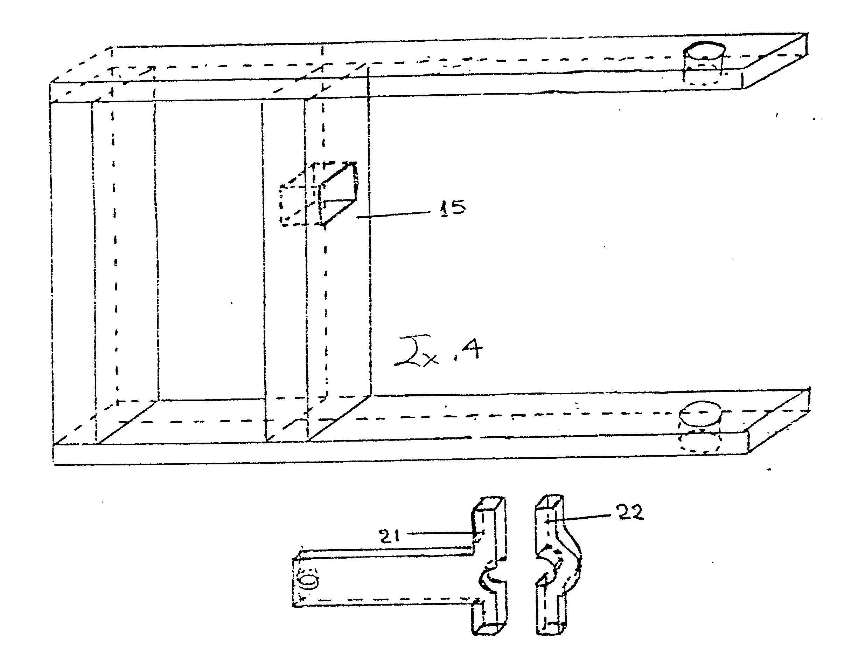

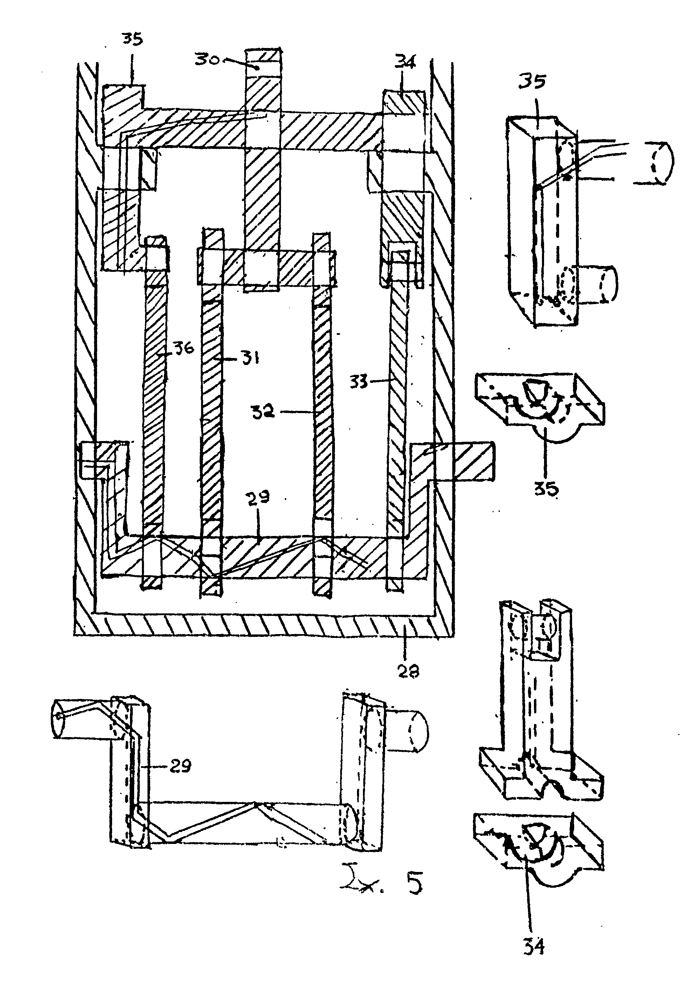

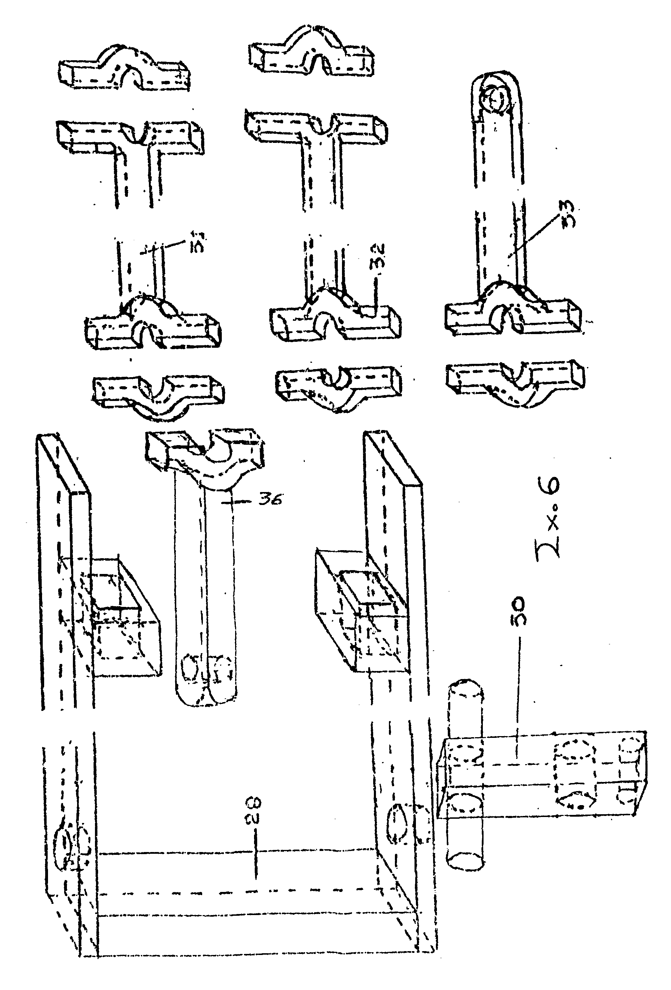

## Claims

I. A winch consisting of one metallic box (I) of square cross-section which has, at its oppostive walls, two apertures ( holes ) on which rests and rotates a crank (2)at the knob of which is connected one head (3) and the bearing (4) of a connecting rod whose other end is also modulated into a bearing (5) and a head (6) of connecting rod which is connected with the connecting rod knob of the shaft (7)where is connected the head and the bearing (8) of connecting rod by which the motion (drive ) is transmitted, while there also exists another connecting rod (9) , similar to the others, which connects the two cranks (2) and (7), the latter resting and rotating on two bearings (II) and (I2) whose base is modulated into two stems (I3) and (I4) by which the crank in question (7) moves backward and forward ( reciprocatingly) into apertures ( holes ) of the metallic box (I), while the bearings (II) and (I2) and the cranks (2) and (7) have hollownesses (cavities ) through which lubricating oil is circulating.The connecting rod(10) connects the two cranks(2)&(7).

2. A winch consisting, in accordance with claim number (I), of one metallic box (I5) which has, at its base, one aperture (hole ) wherein a piston (I6) is moving backward and forward (reprodatingly),said piston being connected, by means of a pin (I7), with a connecting rod whose bearing (I8) and head (I9) is connected with the connecting rod knob of the crank (20), while at another connecting rod knob of the crank (20) is connected the bearing (2I) and the head (22) of the connecting rod which transmits the motion (drive ) while the base knobs of the crank (20) rotate into two holes (23) and (24) of two cranks (25) and (26) with which the crank (20) is moving next to the center while the cranks (25) and (26) and the crank (20) have hollownesses ( cavities ) through which lubricating oil is circulating.

3. A winch consisting, in accordance with claims number (I) and (2), of one metallic box (28) which has apertures ( holes ) on which rotates the crank (29), the knob of which is connected with the knob of the crank (30) by means of two connecting rods (3I) and (32), while the bearings (34,35)is connected with connecting rods(33,36) with the crank (29)

Fig. 2

EP 0 412 044 A2

Fig. 3

Fig. 5